**Europäisches Patentamt**

**European Patent Office**

**Office européen des brevets**

(11) Publication number : **0 501 681 A1**

# (12) EUROPEAN PATENT APPLICATION

(21) Application number : **92301428.6**

(22) Date of filing : **20.02.92**

(51) Int. Cl.⁵ : **G01B 7/00, H01H 1/60**

(30) Priority : **28.02.91 FR 9103138**

(43) Date of publication of application :
**02.09.92 Bulletin 92/36**

(84) Designated Contracting States :
**CH DE FR GB IT LI SE**

(71) Applicant : **Renishaw Metrology Limited
New Mills
Wotton-Under-Edge, Gloucestershire GL12
8JR (GB)**

(72) Inventor : **Collingwood, David, The Cottage
Wigmore Green, Middleyard, Kings Stanley
Stonehouse, Gloucesterhire GL10 3QD (GB)**
Inventor : **Gonzalez, Louis Philibert
7 Avenue du Verger
F-17230 Dammartin en Goele (FR)**

(74) Representative : **Jackson, John Timothy et al
Renishaw plc Patent Department New Mills
Wotton-under-Edge Gloucestershire GL12 8JR
(GB)**

(54) **Signal conditioning circuit for trigger probe.**

(57) A touch trigger probe (11) has contacts (10) which open when a stylus (13) touches a workpiece. When this occurs a trigger signal is generated by a comparator (18). When the contacts (10) are open, an oscillator (24) generates pulses, which are applied to the contacts (10) via a step-up transformer (28). If, over a period of time in use, an oxide film or other contamination builds up on the contacts (10), tending to prevent correct closing of the contacts, this contamination is burnt off by the pulses during the closing of the contacts (10). The contacts (10) are thus kept clean and the life of the probe (11) is improved.

Fig.1

EP 0 501 681 A1

This invention relates to signal conditioning circuits, which can be used to condition the output of trigger probes. Trigger probes are used for measuring workpieces on position determination apparatus such as coordinate measuring machines or machine tools, and deliver a trigger signal when a position measurement is to be taken.

A known type of such probe is described in US patent 4,153,998 (McMurtry). It comprises a workpiece-contacting stylus which is biased by a spring into a rest position defined by kinematically arranged seating elements. A normally closed electrical circuit through the kinematic seating elements is opened when the stylus is deflected by contact with a workpiece, and the opening of this electrical circuit is detected to provide a trigger signal indicating contact between the stylus and the workpiece.

In practice, such probes are sold with an interface circuit which monitors the resistance across the kinematic seating elements. The trigger signal is developed at the output of the interface when the resistance across the contacts formed by the seating elements increases above a certain predetermined threshold, as the contacts open. The output signal from the interface reverts to its original state to indicate when the contacts re-close, i.e. when the stylus has correctly reseated in its kinematic seating elements and the resistance across the contacts falls.

The kinematic seating arrangement of the probe ensures that the stylus always returns to an extremely repeatable mechanical rest position, and the interface circuit discussed above ensures that the electrical generation of the trigger signal is also very repeatable. This repeatability ensures that the probe gives highly accurate results when used on position determination apparatus.

Very occasionally, however, a problem is experienced after the probe has been in use for a long time. After the stylus has returned to its rest position the output of the interface still indicates that the stylus has not correctly reseated in the kinematic seating arrangement. Such a problem has to be rectified before further measurements can be taken. This is especially inconvenient if the probe is being used to take a sequence of measurements automatically, as is nowadays usually the case.

Our investigations of this problem show that the mechanical reseating of the stylus in its kinematically-defined rest position is in general perfectly satisfactory. We have now found that the problem arises, particularly in a probe which has been used for some time, because the resistance across the seating elements when mechanically reseated is no longer zero, but can rise above the threshold which is detected by the interface. The interface is then unable to distinguish between the seated and unseated states of the stylus.

The present invention provides a signal conditioning circuit for a trigger probe for position determination apparatus, the probe having electrical contacts, the circuit comprising means for detecting electrical operation of the contacts and for generating a trigger signal in response thereto, characterised in that the circuit further comprises means for varying a voltage across the contacts so as to reduce any tendency of the resistance of the contacts when closed to increase in use.

Preferred embodiments of the invention will now be described by way of example, with reference to the accompanying drawings, in which:

Fig 1 is a circuit diagram of a touch trigger probe and a first interface, and

Fig 2 is a circuit diagram of a touch trigger probe and a second interface.

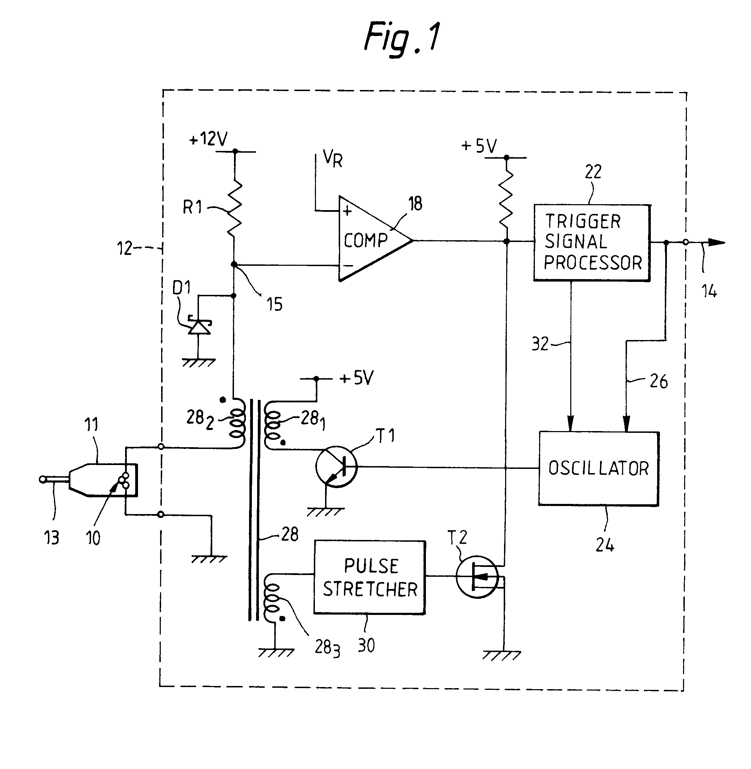

Referring to Fig 1, a touch trigger probe 11 made in accordance with US patent 4,153,998 has kinematically arranged seating elements 10, wired as electrical contacts. Although only one set of such contacts 10 is shown, there are in fact three such sets wired in series, as is well known. The probe 11 has a stylus 13 for contacting a workpiece. In the normal state of the probe, where it is not contacting a workpiece, the stylus 13 is in its seated position and the contacts 10 are closed. When the stylus 13 touches a workpiece, it is unseated, and the contacts 10 open.

To provide a trigger signal denoting the instant at which the contacts 10 open, the contacts 10 are connected to an interface 12. This may be provided separately from the probe 11, as shown, or it may be built into the probe. The interface is provided with generally conventional circuitry to produce the trigger signal. This includes a resistor R1 in series with the contacts 10, connected to a +12 volt power supply, so that current flows through the contacts when they are closed. Thus, when the contacts are closed, a point 15 is grounded, and when they open, the voltage at the point 15 rises. This point 15 is connected to the inverting input of a comparator 18, the non-inverting input of which is connected to a threshold reference voltage $V_R$. Thus, during opening of the contacts, the output of the comparator 18 produces a trigger signal as the voltage at point 15 rises through the threshold level $V_R$, corresponding to a contact resistance of about 1.5 kilohms. This trigger signal is processed by a signal conditioning circuit 22, which includes such conventional functions as debouncing. An output is thus produced on a line 14, which is a logical low or high signal, representing the seated or unseated state of the contacts 10 in the probe 11. The trigger signal and the subsequent reseating of the stylus are indicated by the rising and falling edges of the output 14. This output 14 is taken to the control of a coordinate measuring machine or machine tool in which the probe 11 is mounted, in the usual way.

The circuitry R1,18 which generates the trigger signal, as described above, is generally conventional and found in commercially available interfaces such as that sold by Renishaw Metrology, Wotton-Under-Edge, United Kingdom, under the designation PI4. However, this circuitry can advantageously be replaced by the corresponding circuitry for generating a trigger signal disclosed in our co-pending Patent Application no......, Applicant's reference 185, corresponding to French Patent Application No. 91.03137.

When the output of the trigger signal processing circuit 22 goes high, indicating that the contacts 10 have just unseated, an oscillator 24 (which may be based around a unijunction transistor) is switched on via a line 26. The oscillator 24 produces pulses at a rate of about 13Hz, which are supplied via a buffer transistor T1 to the primary winding $28_1$ of a transformer 28. This transformer has a secondary winding $28_2$ which is in series between the resistor R1 and the probe contacts 10. The primary winding $28_1$ consists of about 30 turns, and the secondary winding $28_2$ consists of about 150 turns, wound on a ferrite core.

When the contacts 10 are open, therefore, positive-going pulses are applied across them, added to the 12V DC supplied via the resistor R1. The voltage of the pulses added to the 12V supply will depend in practice upon the length of the cable connecting the probe 11 to the interface 12, and can vary between an additional 20V (for a short cable) and an additional 5V (for a long cable). A Schottky diode D1 prevents negative spikes feeding through to the comparator 18. Furthermore, to help prevent the pulses prematurely and incorrectly indicating that the contacts 10 have reseated, the pulses are picked up by a further secondary winding $28_3$ of the transformer 28, consisting of about 20 turns. These pulses are stretched slightly in a pulse stretching circuit 30, to ensure that they last longer than the pulses being fed to the contacts 10. The pulses at the output of the stretching circuit 30 turn on a field effect transistor T2, which pulls the output of the comparator 18 to ground during each pulse. The trigger signal generator is therefore inhibited during each pulse, and is unable to signal reseating of the contacts 10 except in the interval between adjacent pulses.

When the probe stylus 13 does reseat, assuming correct normal operation of the probe, the contacts 10 close. This is detected by the comparator 18, the output of which goes high. The resulting signal is processed by the circuit 22 in the usual way, possibly after a slight delay if the transistor T2 had been turned on by a pulse. The trigger signal processing circuit 22 quickly gives a signal (after about 20 ms delay) on a line 32 to switch off the oscillator 24 and prevent the generation of further pulses. The output line 14 returns to the low state after debouncing.

Should the resistance across the contacts 10 remain higher than that set by the threshold $V_R$ when the stylus 13 reseats, then the combined voltage of the 12V supplied through resistor R1 and the pulses generated in the secondary winding $28_2$ is applied across the contacts as they close. We have found that this reduces any tendency of the contact resistance to increase in use. The increased resistance may be caused by the formation of corrosion or contamination, e.g. an oxide film or pitting, on the surface of the contacts. Our belief is that the applied voltage causes burning of the contamination to clean the contacts, and ensures that correct closing of the contacts take place. As soon as correct closing occurs, it is detected as described above by the comparator 18, and the oscillator 24 is switched off and the low output signal is provided on the line 14.

Since the higher voltage pulse is provided across the contacts 10 every time they close, there is a regular cleaning effect upon the contacts which tends to prevent trouble arising. We have tested a probe with an interface as described above, modified to include the trigger generation circuit described in our above-mentioned copending application, and have had satisfactory results for 14 million triggering/reseating cycles of operation of the probe.

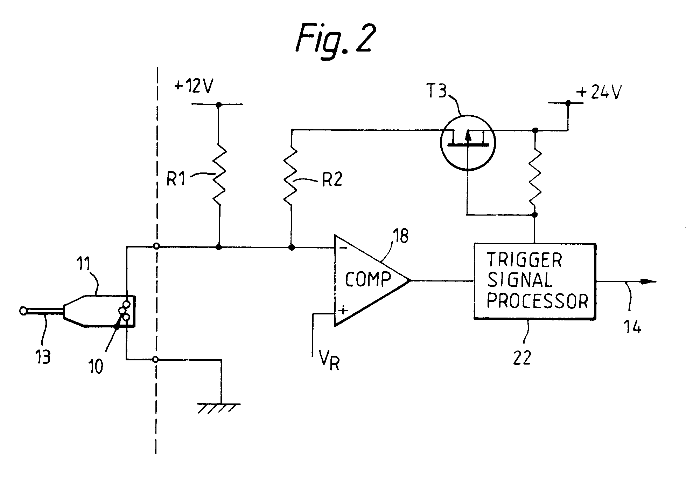

Fig 2 shows a simpler interface for the probe 11, and the same reference numerals have been used as in Fig 1, to describe similar components.

As before, the probe contacts 10 are in series with a resistor R1 between a +12V supply rail and ground, this time without any intervening transformer winding. A comparator 18 monitors the resistance of the contacts, and provides a trigger output on line 14 via a trigger signal processor 22 when the voltage across the contacts rises above a threshold $V_R$, during opening of the probe contacts 10.

As soon as the trigger signal processor 22 detects that the contacts have opened, it switches on a transistor T3. The transistor T3 applies a higher voltage from a +24V supply rail to the probe contacts 10, via a resistor R2. The resistor R2 preferably has a lower value than the resistor R1, e.g. 2 kilohms if R1 is 22 kilohms. As in the embodiment of Fig 1, should the resistance across the contacts 10 remain high when the stylus 13 of the probe reseats, then this higher voltage is applied across the increased contact resistance. Again, this helps reduce any tendency of the contact resistance to increase in use. The higher current capacity of the resistor R2 compared with R1, helps this effect, though it is desirable not to use a current which is so high that damage might be caused to the contact surfaces.

The trigger signal processor 22 in Fig 2 may include monostables to control the transistor T3 such that it switches on about 10ms after the contacts 10 open, and to switch the transistor T3 off again about 10ms after the comparator 18 shows that the contact resistance has decreased to a value below the trigger threshold. This leave the probe and interface ready for detecting the next occasion upon which the stylus 13 is deflected by contact with the workpiece. The comparator 18 may be arranged to return to the untriggered state at a higher threshold voltage than the voltage $V_R$, to take account of the higher voltage applied via the resistor R2 and transistor T3 when the interface is in the trigger state.

## Claims

1. A signal conditioning circuit for a trigger probe (11) for position determination apparatus, the probe having electrical contacts (10), the circuit comprising means (R1,18) for detecting electrical operation of the contacts and for generating a trigger signal in response thereto, characterised in that the circuit further comprises means (24,T1,28;T3,R2) for varying a voltage across the contacts so as to reduce any tendency of the resistance of the contacts when closed to increase in use.

2. A circuit according to claim 1, wherein said voltage varying means comprises means (24,T1,28) for applying pulses across the contacts.

3. A circuit according to claim 2, including a step-up transformer (28) for increasing the voltage of the pulses.

4. A circuit according to claim 2 or claim 3 including means ($28_3$,30,T2) for inhibiting the detecting means (R1,18) during a said pulse.

5. A circuit according to any one of the preceding claims wherein said voltage varying means (24,T1,28;T3,R2) applies a voltage which is higher than the voltage normally applied to the contacts (10) by the detecting means (R1,18).

6. A circuit according to any one of the preceding claims, wherein said voltage varying means (24,T1,28;T3,R2) is switched off when the detecting means (R1,18) indicates that the contacts (10) have closed.

# Fig.1

# Fig. 2

**European Patent Office**

# EUROPEAN SEARCH REPORT

Application Number

EP    92 30 1428

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| Y | WO-A-8 801 726 (RENISHAW PLC)<br>* the whole document *<br>--- | 1,2,3,5 | G01B7/00<br>H01H1/60 |
| Y | US-A-2 817 774 (ALLEN-BRADLEY COMPANY)<br>* the whole document *<br>--- | 1,2,3,5 | |
| A | US-A-4 777 479 (UNISYS CORP.)<br>* the whole document *<br>--- | 1,2,3,5 | |
| A | US-A-3 092 739 (ROSEMOUNT ENGINEERING CO.)<br>* the whole document *<br>--- | 1,2,3,5 | |
| A,D | US-A-4 153 998 (ROLLS-ROYCE 1971 LTD)<br>* the whole document *<br>----- | 1 | |
| | | | **TECHNICAL FIELDS SEARCHED (Int. Cl.5 )**<br><br>G01B<br>H01H<br>G01R |

The present search report has been drawn up for all claims

| Place of search | Date of completion of the search | Examiner |
|---|---|---|
| THE HAGUE | 16 JUNE 1992 | BROCK T.J. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)